Europäisches Patentamt

European Patent Office

Office européen des brevets

(19)

(11) Veröffentlichungsnummer: **0 035 761**

**A2**

(12) **EUROPÄISCHE PATENTANMELDUNG**

(21) Anmeldenummer: 81101593.2

(22) Anmeldetag: 05.03.81

(51) Int. Cl.³: **G 10 L 1/08**

(30) Priorität: 07.03.80 DE 3008830

(43) Veröffentlichungstag der Anmeldung:
16.09.81 Patentblatt 81/37

(84) Benannte Vertragsstaaten:
BE FR GB IT NL

(71) Anmelder: SIEMENS AKTIENGESELLSCHAFT Berlin
und München
Postfach 22 02 61
D-8000 München 22(DE)

(72) Erfinder: Zwicker, Eberhard, Prof. Dr.
Walchstadter Strasse 38
D-8021 Icking(DE)

(72) Erfinder: Daxer, Wolfgang, Dipl.-Ing.
Kellerstrasse 43
D-8000 München 80(DE)

(54) Verfahren zum Betrieb eines Spracherkennungsgerätes.

(57) Die Erfindung bezieht sich auf ein Verfahren zum Betrieb eines Spracherkennungsgerätes, bei dem das Sprachsignal eines isoliert gesprochenen Wortes in mehrere Frequenzbänder aufgeschlüsselt, gleichgerichtet und durch periodische Abtastung und Digitalisierung in ein Kanal-Zeit-Muster (P11 ...Pnm) umgeformt wird, das mit den gespeicherten Mustern mehrerer Vergleichsworte auf Übereinstimmung geprüft wird. Angestrebt wird hierbei eine Normierung der akustischen Länge des gesprochenen Wortes, um den Einfluß der Sprechgeschwindigkeit auszuschalten. Nach der Erfindung wird das durch eine Umschreibung des Kanal-Zeit-Musters (P11---Pnm) in einem Speicher erzielt, bei der die akustische Wortlänge durch Weglassen oder Mehrfach-Umschreiben vorgegebener Bitgruppen (17) komprimiert oder gedehnt wird. Der Vorteil liegt in der Homogenität des Normierungsvorganges, wodurch Informationsverzerrungen vermieden werden. Der Anwendungsbereich umfaßt akustische Eingabeeinrichtungen für Steuergeräte.

FIG 1

EP 0 035 761 A2

Croydon Printing Company Ltd.

SIEMENS AKTIENGESELLSCHAFT      Unser Zeichen
Berlin und München              VPA 80 P 8017 E

Verfahren zum Betrieb eines Spracherkennungsgerätes

Die Erfindung bezieht sich auf ein Verfahren zum Betrieb eines Spracherkennungsgerätes nach dem Oberbegriff des Anspruchs 1.

Ein solches Verfahren ist der Zeitschrift "Kybernetik" Juni 1968, 4. Band, Seiten 228 bis 234, entnehmbar. Um eine hohe Erkennungsrate zu erzielen, ist es dabei notwendig, das eintreffende Sprachsignal auf eine vorgegebene Wortlänge zu normieren, da nicht angenommen werden kann, daß ein zu erkennendes Wort, insbesondere von verschiedenen Sprechern, jeweils gleich schnell gesprochen wird.

Der Erfindung liegt die Aufgabe zugrunde, ein Verfahren der eingangs genannten Art so zu verbessern, daß sowohl die zeitliche Normierung eines eintreffenden Sprachsignals als auch der sich anschließende Vergleich zwischen dem normierten Sprachsignal und den Vergleichssignalen schnell erfolgt. Diese Aufgabe wird durch die im Anspruch 1 gekennzeichneten Merkmale gelöst.

Der mit der Erfindung erzielbare Vorteil besteht insbesondere darin, daß die ein Kanal-Zeit-Muster bildenden, digitalisierten Abtastwerte des Sprachsignals mittels eines einfachen und schnellen Umschreibevorganges in einem Speicher zeitlich gedehnt oder komprimiert werden, ohne daß hierdurch eine wesentliche Informationsverfälschung des Sprachsignals entsteht. Andererseits ergibt sich auch ein einfacher und schnell durchführ-

St 1 Hub / 07.03.80

barer Vergleich zwischen den umgeschriebenen, digitalisierten Abtastwerten des Sprachsignals und den entsprechenden, im Spracherkennungsgerät gespeicherten Werten jedes der Vergleichssignale.

Bevorzugte Ausgestaltungen des Verfahrens nach der Erfindung sind in den Ansprüchen 2 bis 7 gekennzeichnet, während die Ansprüche 8 und 9 auf Schaltungsanordnungen zur Durchführung dieses Verfahrens gerichtet sind.

Die Erfindung wird nachfolgend anhand der Zeichnung näher erläutert. Dabei zeigt:

Fig. 1  eine schematische Darstellung eines zur Durchführung des erfindungsgemäßen Verfahrens geeigneten Spracherkennungsgerätes und

Fig. 2  eine schematische Darstellung des Umschreibevorgangs für ein von einem Sprachsignal abgeleitetes Kanal-Zeit-Muster.

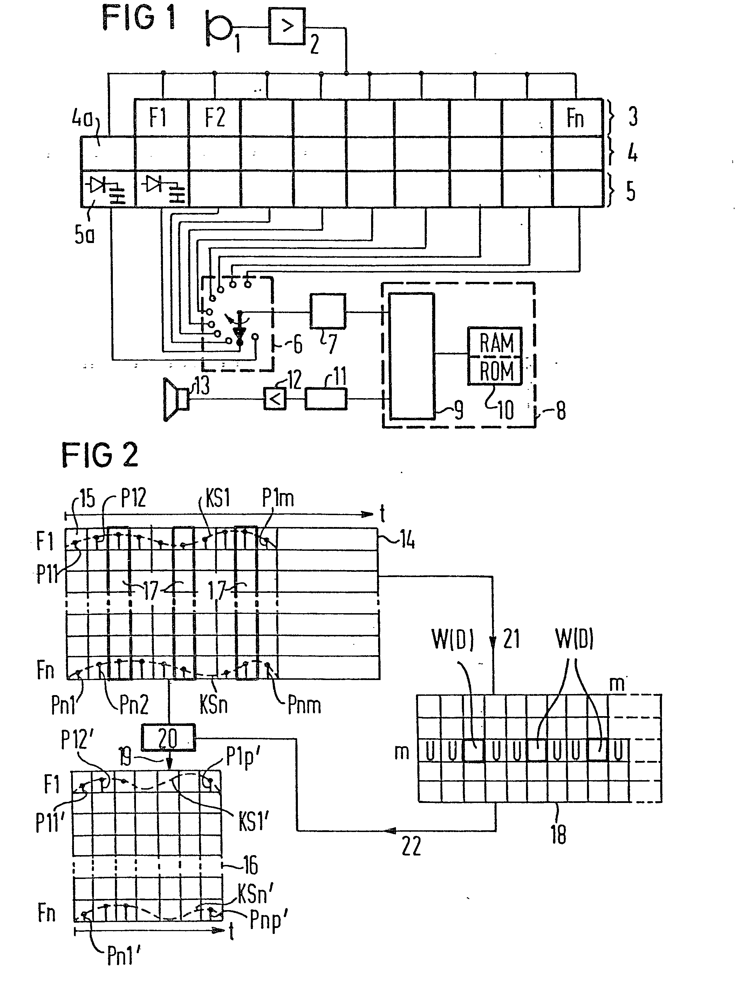

Die eingangsseitigen Stufen des in Fig. 1 dargestellten Spracherkennungsgerätes bestehen aus einem Mikrofon 1 und einem diesem nachgeschalteten Verstärker 2. Das von diesem übertragene Frequenzband, das z. B. den Frequenzbereich von 0,3 bis 4,3 kHz überdeckt, wird in einer Filterbank 3 mit einer Reihe von Bandpaßfiltern F1...Fn in einzelne Frequenzbänder aufgeteilt. Es können beispielsweise neun Bandpässe vorgesehen werden, deren Mittenfrequenzen dann zweckmäßigerweise etwa bei: 0,36; 0,51; 0,69; 0,91; 1,21; 1,6; 2,15; 2,94; 4,1 kHz liegen. Die Durchlaßbereiche der Bandpaßfilter F1...Fn grenzen vorzugsweise aneinander. Den einzelnen Bandpaßfiltern sind jeweils Logarithmierstufen 4 sowie Gleichrichter- und Tiefpaßstufen 5 nachgeschaltet, deren Ausgänge mit den Eingängen einer Abtastvorrichtung 6 beschaltet sind. Der Ausgang der Abtasteinrichtung 6 ist über einen Analog/Digital-Wandler 7 an den Dateneingang eines Mikrocomputers 8 geführt, dessen Zentraleinheit mit 9 und dessen Speicheranordnung mit 10 bezeichnet sind. Ein Datenausgang des Mikrocomputers 8
ist mit einer Sprachsynthese-Einrichtung 11 beschaltet,
deren Ausgang über eine Verstärkerstufe 12 mit einem
Lautsprecher 13 verbunden ist. Vorzugsweise ist eine
zusätzlich Logarithmierstufe 4a vorgesehen, die den
genannten Bandpässen 3        eingangsseitig parallelgeschaltet ist. Ihr ist eine zusätzliche Gleichrichter-
und Tiefpaßstufe 5a nachgeschaltet, deren Ausgang mit
einem weiteren Eingang der Abtastvorrichtung 6 beschaltet ist.

Die beim Sprechen eines Wortes in den Bandpaßfiltern
F1...Fn auftretenden Wechselspannungen, die auch als
Kanalsignale bezeichnet sein sollen, werden logarithmiert, gleichgerichtet und über die in den Stufen 5
enthaltenen Tiefpässe geführt. Die Grenzfrequenz dieser
Tiefpässe ist beispielsweise so gewählt, daß eine Abtastung der Pegel der Kanalsignale im zeitlichen Abstand
von 20 ms erfolgen kann. Die hierbei erhaltenen Abtastwerte werden im Analog/Digital-Wandler 7 z. B. in 8-Bit-
Worte digitalisiert. Wird eine maximale zeitliche Länge
des gesprochenen Wortes von 1 s angenommen, so entsteht
ein sogenanntes Kanal-Zeit-Muster, das für jeden der
z. B. 9 Frequenzkanäle jeweils 50 abgetastete Pegelwerte
umfaßt. Dabei wird jeder Pegelwert durch ein 8-Bit-Wort
dargestellt.

In Fig. 2 ist eine Speichermatrix 14 dargestellt, die
als ein Teil des einen wahlfreien Zugriff aufweisenden
RAM-Speichers der Speicheranordnung 10 aufzufassen ist.
In den Zeilen der Speichermatrix 14, die den durch die
Bandpaßfilter F1...Fn bestimmten Frequenzbändern zugeordnet sind, sind die nacheinander abgetasteten Pegelwerte der zugehörigen Kanalsignale in den einzelnen Speicherplätzen von links nach rechts gespeichert, was durch die Zeitachse t angedeutet wird. In der ersten Zeile der Matrix 14 befinden sich somit bei m während der akustischen Länge des gesprochenen Wortes durchgeführten Abtastvorgängen die digitalisierten Pegelwerte P11 bis P1m, in der zweiten Zeile die Pegelwerte P21 bis P2m, usw. Hierbei ist aber zu bemerken, daß wegen der Digitalisierung der Pegelwerte für jeden in der Matrix 14 dargestellten Speicherplatz, z. B. 15, in der Speicheranordnung 10 tatsächlich 8 Speicherplätze vorhanden sind, in denen jeweils 1 Bit des dem abgetasteten Pegelwert, im betrachteten Fall P11, entsprechenden digitalen Wortes gespeichert ist. Der in Pegelwerten ausgedrückte Speicherinhalt von 14 erlaubt eine Darstellung der Zeitfunktionen der an den Ausgängen der Stufen 5 abgreifbaren Kanalsignale, die mit KS1 bis KSn bezeichnet sind.

Die mit m bezeichnete Anzahl der innerhalb der akustischen Länge des gesprochenen Wortes liegenden Abtastvorgänge ist von der Sprechgeschwindigkeit abhängig. Um den Einfluß der Sprechgeschwindigkeit bei der Worterkennung auszuschalten, wird auf eine vorgegebene Wortlänge normiert. Dies geschieht durch ein Umschreiben der in der Speichermatrix 14 enthaltenen Informationen in eine Speichermatrix 16, die n Zeilen und p Spalten aufweist. Dabei ist die Matrix 16 ebenfalls als ein Teil des RAM-Speichers der Anordnung 10 aufzufassen. Ist beispielsweise p = m - 3, so muß beim Umschreiben eine Gruppe 17 von in Fig. 2 in drei Spalten zusammengefaßten Abtastwerten weggelassen werden. Damit ergibt sich eine zeitliche Komprimierung sämtlicher Kanalsignale auf eine normierte Wortlänge, die p Abtastvorgängen entspricht. Besteht andererseits die Beziehung p = m + 3, so ergibt sich eine Dehnung der akustischen

0035761

Wortlänge auf die genannte normierte Wortlänge, wenn jeder Abtastwert der in Fig. 2 stark umrandeten Gruppe 17 zweimal umgeschrieben wird, und zwar vorzugsweise jeweils in zwei nebeneinander liegende Spalten der Maxtrix 16. Um eine möglichst homogene Kompression oder Dehnung der akustischen Wortlänge zu erzielen, bei der der Informationsinhalt der Kanalsignale KS1...KSn nicht verfälscht wird, ist es erforderlich, die Gruppe 17 der wegzulassenden oder doppelt umzuschreibenden Abtastwerte möglichst gleichmäßig auf die m-Spalten der Matrix 14 aufzuteilen. Dies geschieht zweckmäßig in der Weise, daß eine der Zahl m eindeutig zugeordnete Folge von Umschreibeentscheidungen herangezogen wird, die in einer Speichermatrix 18 enthalten sind. Diese Matrix kann als Teil eines in der Speicheranordnung 10 enthaltenen Festwertspeichers (ROM) aufgefaßt werden. Man ordnet der Zahl m eine bestimmte Zeile der Matrix 18 zu, wobei in dieser m Umschreibeentscheidungen enthalten sind. In der Matrix 18 sind drei Speicherplätze innerhalb der Zeile m hervorgehoben, in denen die Umschreibeentscheidungen W (weglassen) oder D (doppelt umschreiben) gespeichert sind. Diese Speicherplätze sind in denjenigen Spalten von 18 angeordnet, die den Spalten der Gruppe 17 in der Matrix 14 entsprechen. In den übrigen Speicherplätzen der Zeile m ist jeweils der Befehl U (normal umschreiben) gespeichert. Bei einer Beeinflussung des durch einen Pfeil 19 dargestellten Umschreibevorgangs durch die Umschreibeentscheidungen U, W und D, was durch den Block 20 und die Pfeile 21 und 22 angedeutet ist, ergibt sich die gewünschte Kompression oder Dehnung der akustischen Wortlänge auf eine normierte Länge, die p Abtastvorgängen entspricht. In dieser Weise können beispielsweise akustische Wortlängen von 280 ms bis 1000 ms auf jeweils 500 ms normiert werden.

Die in der Matrix 16 enthaltenen digitalisierten Kanal-Zeit-Muster der Kanalsignale KS1'...KSn' werden sodann
mit den entsprechenden Vergleichsmustern einer Reihe
von Vergleichssignalen, die in der Speicheranordnung 10
gespeichert sind, verglichen. Die Vergleichssignale
entsprechen einer Anzahl vorgegebener Worte, die zum
sogenannten Wortschatz des Spracherkennungsgerätes
gehören. Entspricht das gesprochene Wort einem der dem
Spracherkennungsgerät vorgegebenen Worte, so wird die
Übereinstimmung zwischen beiden in einem sich dem
Umschreibevorgang anschließenden Erkennungsvorgang
festgestellt. Der Erkennungsvorgang läuft dabei mit
Vorteil so ab, daß zwischen den Pegelwerten P11'...Pnp'
der Kanalsignale KS1'...KSn' und den entsprechenden
Pegelwerten jedes der vorgegebenen Worte jeweils die
Differenz gebildet wird und die erhaltenen Differenzbeträge addiert werden. Als Ergebnis des Vergleichs
zwischen dem gesprochenen Wort und jedem einzelnen der
vorgegebenen Worte ergibt sich ein Additionsbetrag,
der ein Maß für die Unähnlichkeit des Vergleichsmusters
zu dem von dem gesprochenen Wort abgeleiteten Kanal-
Zeit-Muster darstellt. Das dem kleinsten Additionsbetrag
zugeordnete, vorgegebene Wort stellt dann das Erkennungsergebnis dar.

Zum sicheren Erkennen des Anfangs und Endes des gesprochenen Wortes wird nach einer Weiterbildung der
Erfindung das die Stufen 4a und 5a durchlaufende Sprachsignal herangezogen. Periodisch abgetastete Pegelwerte
desselben werden, ggf. nach vorheriger Integration
über einen festen Zeitraum, mit einem vorgegebenen
Schwellenwert verglichen. Beim Überschreiten des
letzteren wird der Wortanfang festgestellt und mit dem
Einlesen der digitalisierten Pegelwerte P11...Pnm in
die Matrix 14 begonnen. Das Wortende wird dadurch erkannt, daß die abgetasteten Pegelwerte des Sprachsignals,
ggf. nach vorheriger Integration über ein festes Zeitintervall, unter einen vorgegebenen Schwellenwert absinken. Danach wird die Abtastung der Kanalsignale KS1
bis KSn abgebrochen. Anstelle des die Stufen 4a und 5a
durchlaufenden Sprachsignal kann weiterhin auch eines
der Kanalsignale KS1 bis KSn zur Feststellung des
Wortanfangs und Wortendes herangezogen werden.

Bei praktischen Versuchen, denen eine Aufschlüsselung
des Sprachsignals auf 9 Frequenzbänder, ein Abtasttakt von 20 ms, eine normierte Wortlänge von 500 ms,
ein Wortschatz von 32 Worten und eine Digitalisierung
der abgetasteten Pegelwerte der Kanalsignale in 8-Bit-
Worte zugrunde lagen, wurden die Verfahrensschritte
der zeitlichen Normierung, des Mustervergleichs und des
Erkennungsprozesses in etwa 200 ms abgeschlossen.

Nach einer anderen Weiterbildung des Erfindungsgedankens
wird das dem Erkennungsergebnis entsprechende, vorgegebene Wort über die Sprachsynthese-Einrichtung und
den Lautsprecher 13 wieder akustisch ausgegeben, so
daß der Benutzer des Spracherkennungsgeräts von einer
etwaigen Fehlerkennung sofort in Kenntnis gesetzt
wird und notfalls das zu erkennende Wort wiederholen
kann.

Eine vorteilhafte Anwendungsmöglichkeit für das Verfahren nach der Erfindung besteht bei der Ableitung
elektrischer Schaltbefehle aus einer Reihe von vorgegebenen Befehlsworten. Derartige Schaltbefehle können
insbesondere zur Bewegung von künstlichen Gliedmaßen
herangezogen werden.

9 Patentansprüche
2 Figuren

Patentansprüche

1. Verfahren zum Betrieb eines Spracherkennungsgerätes, bei dem aus dem Sprachsignal eines isoliert gesprochenen Wortes eine Mehrzahl von nach unterschiedlichen Frequenzkanälen aufgeschlüsselten, gleichgerichteten Kanalsignalen abgeleitet werden, bei dem die Kanalsignale periodisch abgetastet und digitalisiert werden, so daß ein Kanal-Zeit-Muster entsteht, welches in einen digitalen Speicher eingeschrieben wird und mit entsprechenden Mustern einer Reihe von Vergleichssignalen verglichen wird, und bei dem das die beste Übereinstimmung ergebende Vergleichssignal als Erkennungsergebnis herangezogen wird, d a d u r c h   g e k e n n z e i c h - n e t ,   daß eine Umschreibung des digitalisierten Kanal-Zeit-Musters (P11...Pnm) erfolgt, bei der eine Unterdrückung der zu einer vorgegebenen Gruppe (17) von Abtastwerten gehörenden Bits oder eine Mehrfach-Umschreibung von den zu der Gruppe (17) von Abtastwerten gehörenden Bits vorgenommen wird, wobei die Gruppe (17) in Abhängigkeit von der Gesamtzahl (m) der innerhalb der akustischen Wortlänge erfolgten Abtastvorgänge vorgegeben ist, so daß das umgeschriebene Kanal-Zeit-Muster (P11'...Pnm') einer normierten Anzahl (p) von Abtastvorgängen entspricht, und daß das umgeschriebene Kanal-Zeit-Muster (P11'...Pnp') mit den gespeicherten entsprechenden Mustern der Vergleichssignale verglichen wird.

2. Verfahren nach Anspruch 1, d a d u r c h   g e - k e n n z e i c h n e t ,   daß die Kanalsignale (KS1... KSn) logarithmiert und in einer Tiefpaßstufe (5) gefiltert werden.

3. Verfahren nach Anspruch 1 oder 2, d a d u r c h   g e k e n n z e i c h n e t ,   daß die abgetasteten

Kanalsignale (KS1...KSn) in 8-Bit-Worte digitalisiert
werden.

4. Verfahren nach einem der Ansprüche 1 bis 3,   d a -
d u r c h   g e k e n n z e i c h n e t ,   daß der
Vergleich des umgeschriebenen Kanal-Zeit-Musters (P11'...
Pnp') mit den entsprechenden Mustern der Vergleichssignale in der Weise erfolgt, daß zwischen den einander
entsprechenden digitalisierten Abtastwerten des umgeschriebenen Kanal-Zeit-Musters (P11'...Pnp') und jedes
einzelnen der Vergleichssignale jeweils die Differenzwerte gebildet und diese aufsummiert werden, und daß
das Vergleichssignal, dem die niedrigste Summe zugeordnet
ist, als Erkennungsergebnis herangezogen wird.

5. Verfahren nach einem der Ansprüche 1 bis 4,   d a -
d u r c h   g e k e n n z e i c h n e t ,   daß der
Pegel des gleichgerichteten und ggf. in einer Tiefpaßstufe (5) gefilterten Sprachsignals oder eines der
Kanalsignale (KS1...KSn) zur Feststellung des Wortanfangs
und Wortendes mit jeweils einem Schwellenwert verglichen
wird.

6. Verfahren nach einem der vorhergehenden Ansprüche,
d a d u r c h   g e k e n n z e i c h n e t ,   daß
das dem Erkennungsergebnis entsprechende, vorgegebene
Wort über eine Sprachsynthese-Einrichtung (11) akustisch
ausgegeben wird.

7. Anwendung des Verfahrens nach einem der vorhergehenden
Ansprüche zur Ableitung eines elektrischen Schaltbefehls,
insbesondere zur Bewegung von künstlichen Gliedmaßen,
von einem aus einer Reihe von vorgegebenen Befehlsworten.

8. Spracherkennungsgerät nach Anspruch 1, d a d u r c h
g e k e n n z e i c h n e t , daß eine mit einem
Mikrofon (1) verbundene Filterbank (3) vorgesehen ist,
die eine Reihe von Bandpaßfiltern (F1...Fn) aufweist,
denen Logarithmierstufen (4) und Gleichrichter- und
Tiefpaßstufen (5) nachgeschaltet sind, daß die Ausgänge
der letzteren mit den Eingängen einer Abtastvorrichtung
(6) verbunden sind, deren Ausgang über einen Analog/
Digital-Wandler (7) an den Dateneingang eines Mikrocomputers (8) geführt ist, und daß ein Datenausgang
des Mikrocomputers (8) vorzugsweise mit einer Sprachsynthese-Einrichtung (11) und einem dieser nachgeordneten Lautsprecher (13) beschaltet ist.

9. Spracherkennungsgerät nach Anspruch 8, d a d u r c h
g e k e n n z e i c h n e t , daß eine den Bandpaßfiltern eingangsseitig parallel geschaltete weitere
Logarithmierstufe (4a) und eine dieser nachgeschaltete,
weitere Gleichrichter- und Tiefpaßstufe (5a) mit einem
weiteren Eingang der Abtasteinrichtung (6) verbunden
sind.

FIG 1

FIG 2